# EUROPÄISCHE PATENTSCHRIFT

(11) **EP 0 801 711 B1**
(45) Veröffentlichungstag und Bekanntmachung des Hinweises auf die Patenterteilung: **14.06.2000**
(21) Anmeldenummer: 94928853.4
(22) Anmeldetag: 29.09.1994
(51) Int. Cl.: F03D 7/06

(54) **WINDKRAFTANLAGE MIT H-ROTOR**
WIND TURBINE WITH A DARRIEUS H-ROTOR
INSTALLATION EOLIENNE POURVU D'UN ROTOR EN H

(30) Priorität: 30.09.1993 DE 4333289
(43) Veröffentlichungstag der Anmeldung: 22.10.1997
(73) Patentinhaber: Egon Gelhard Engineering, Inhaberin Frau Theresia Gelhard e.K, D-53909 Zülpich-Dürscheven (DE)
(72) Erfinder: GELHARD, Egon, D-53909 Zülpich-Dürscheven (DE)
(74) Vertreter: Rehders, Jochen
(86) Internationale Anmeldenummer: EP9403275
(87) Internationale Veröffentlichungsnummer: WO9509304

(56) Entgegenhaltungen:
- DE-A- 2 829 716
- US-A- 3 038 543
- US-A- 4 180 372
- US-A- 4 204 805
- US-A- 4 715 782

## Beschreibung

Die Erfindung betrifft eine Windkraftanlage mit Darrieus-H-Rotor aus wenigstens zwei rotationssymmetrisch angeordneten, untereinander und zu einer Drehachse parallel verlaufenden Rotorblättern mit Tragflügelprofilen und um eine zur Drehachse etwa senkrechten Schwenkachse gegen einen Anschlag ausschwenkbaren Starthilfeklappe.

Eine derartige Windkraftanlage mit senkrechter Drehachse ist in der US-A-4 204 805 beschrieben.

Diese Windkraftanlagen mit senkrechter Drehachse weisen den Vorteil auf, daß eine Ausrichtung zur Windrichtung nicht erforderlich und daher der bei Windkraftanlagen mit waagerechter Drehachse erforderliche Aufwand zur Nachführung in Windrichtung entfällt. Diese Windkraftanlagen können jedoch nicht von selber anlaufen, sondern müssen zunächst auf eine bestimmte Mindestdrehgeschwindigkeit durch Fremdantrieb gebracht werden, ehe sie vom Wind getrieben Energie abgeben können.

Um Windkraftanlagen mit Darrieus-H-Rotor mit senkrechter Drehachse selbst anlaufend zu machen, weist eine aus der DE-A-2 829 716 bekannte Windkraftanlage an den Rotorblättern oder an radialen Tragarmen für die Rotorblätter aerodynamische Steuerelemente auf, die ein selbsttätiges Anlaufen bewirken, die Drehgeschwindigkeit der Windkraftmaschine steuern und bei hohen Windgeschwindigkeiten ein Bremsmoment erzeugen. Es handelt sich hierbei um manuell oder automatisch zyklisch mittels hydraulischer oder pneumatischer Einrichtungen auf- oder ausklappbare Elemente, die auf den radialen Tragarmen für die Rotorblätter oder an den Rotorblättern selber entweder im Bereich der Hinterkante oder im mittleren Bereich des Rotorprofils ausklappbar, ausschwenkbar oder ausfahrbar angeordnet sind. Die an den Rotorblättern angeordneten aerodynamischen Steuerelemente sollen sich über die gesamte Länge oder einen Teil der Gesamtlänge der Rotorblätter in Längsrichtung erstrecken. Die auf den radialen Tragarmen angeordneten aerodynamischen Steuerelemente sollen sich ebenfalls über die gesamte Länge oder über einen Teil der Länge dieser Arme erstrecken.

Es ist ersichtlich, daß diese bekannte Art der Anlaufhilfe sowie Geschwindigkeitsregelung mittels aerodynamischer Steuerelemente aufwendig und teuer ist, insbesondere wenn damit auch die Drehzahl der Windkraftanlage gesteuert werden soll, da in diesem Fall die automatische, zyklische Betätigung mittels hydraulischer oder pneumatischer Einrichtungen erforderlich ist.

Aus der US-A-4 180 372 sind bei einer Windkraftanlage mit waagerechter Drehachse des weiteren an den Rotorenden angeordnete, um zur Drehachse parallele Schwenkachsen ausklappbare Bremsklappen bekannt.

Der Erfindung liegt die Aufgabe zugrunde, eine Starthilfe für eine Windkraftanlage mit Darrieus-H-Rotor zu schaffen, die einfach aufgebaut ist, als Starthilfe selbsttätig wirkt und auch bei Verwendung zur Steuerung der Drehgeschwindigkeit der Windkraftanlage bzw. als Sturmbremse für die dann erforderliche zyklische Steuerung mit einem geringen Aufwand auskommt.

Ausgehend von dieser Aufgabenstellung wird bei einer Windkraftanlage der eingangs erwähnten Art vorgeschlagen, daß sie an wenigstens einem freien Ende eines jeden Rotorblatts angeordnete, um eine zur Drehachse des Rotors etwa senkrechten Schwenkachse gegen einen Anschlag ausschwenkbare Starthilfeklappen aufweist.

Werden diese Starthilfeklappen am unteren Ende eines jeden Rotorblatts angeordnet und befindet sich die Schwenkachse bezogen auf die Drehrichtung im Bereich der Profilvorderkante des Rotorblatts sind sie als Starthilfe wirksam senkrecht, da sie bei Stillstand des Rotors und Windstille frei etwa senkrecht herunterhängen und bei aufkommenden Wind am mit der Profilhinterkante in Windrichtung stehenden Rotorblatt in etwa senkrecht herunterhängender Stellung gegen einen Anschlag am Rotorblatt geblasen werden und in dieser Stellung eine Angriffsfläche für den Wind darstellen, der den Rotor in Drehung versetzt während die Starthilfeklappen am mit der Profilvorderkante in Windrichtung stehenden Rotorblatt an das untere Ende des Rotorblatts angehoben werden und keine Angriffsfläche mehr bieten.

Vorzugsweise kann die Fläche der Starthilfeklappen größer als die Querschnittsfläche der Rotorblätter sein, was die Angriffsfläche für den Wind beim Anlauf vergrößert und gleichzeitig bei höherer Drehgeschwindigkeit die Bildung von Randwirbeln an den Enden der Rotorblätter vermindert, wodurch der Wirkungsgrad erhöht wird. Die Starthilfeklappen können auch an den nach oben weisenden Enden der Rotorblätter angeordnet sein, können sich jedoch in diesem Fall nicht durch die Wirkung der Schwerkraft in die Starthilfestellung bewegen. Daher müssen in diesem Fall Federelemente vorgesehen werden, die die Starthilfeklappen nachgiebig federnd ausklappen, jedoch nicht so stark sind, daß sie nicht durch den Wind an das sich gegen den Wind drehende Rotorblatt eingeklappt werden können.

Sollen die Starthilfeklappen auch zur Steuerung der Drehgeschwindigkeit und als Sturmbremse dienen, ist eine zyklische Steuerung erforderlich, die beim Anfahren die Starthilfeklappen an den mit dem Wind laufenden Rotorblättern ausklappt und an den gegen den Wind laufenden Rotorblättern einklappt, während sie zur Drehgeschwindigkeitsteuerung und als Sturmbremse an den gegen den Wind laufenden Rotorblättern ausgeklappt und an den mit dem Wind laufenden Rotorblättern eingeklappt werden. Um diese Bewegungen zu erreichen, müssen die Starthilfeklappen aktiv kraftbeaufschlagt sein, was sich mittels etwa axial in den Rotorblättern angeordneten Hydraulik-Kolben-Zylinder-Einheiten, die mit den Starthilfeklappen verbunden sind und das Ein- bzw. Ausschwenken bewirken, oder mechanisch oder elektrisch gesteuert erreichen läßt.

In diesem Fall ist eine windrichtungs- und windgeschwindigkeitsabhängig wirkende Steuereinheit für die zyklische Kraftbeaufschlagung der Starthilfeklappen vorgesehen, die in einem Elektronikteil die im Bereich der Windkraftanlage gemessene Geschwindigkeit und Windrichtung zu Steuerbefehlen verarbeitet, die an eine Hydraulik-Einheit gehen, die die Hydraulik-Kolben-Zylinder-Einheiten in den Rotorblättern entsprechend zyklisch beaufschlagt.

Die Erfindung wird nachstehend anhand eines in der Zeichnung dargestellten Ausführungsbeispiels des näheren erläutert. In der Zeichnung zeigen:

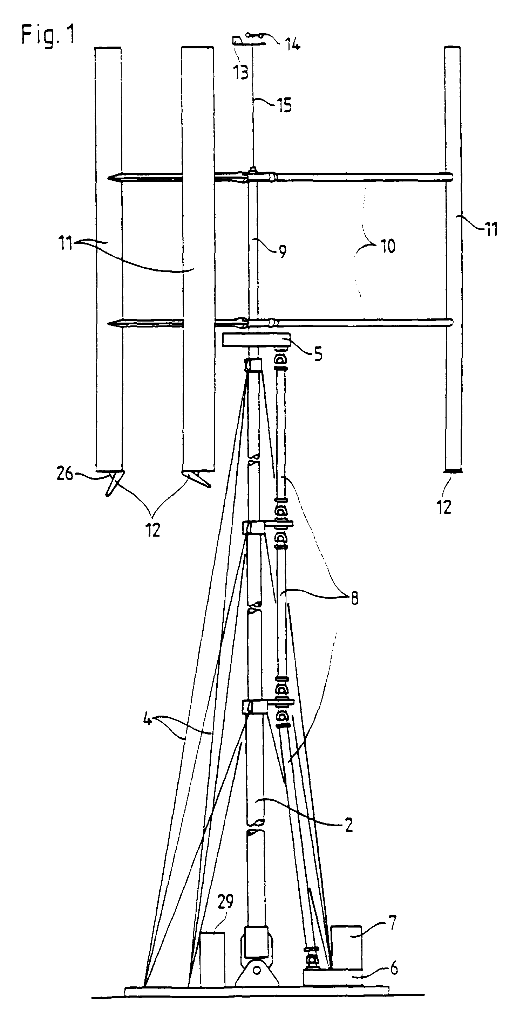

- Fig. 1: eine Seitenansicht einer vollständigen, erfindungsgemäßen Windkraftanlage,
- Fig. 2: eine perspektivische Teilansicht, teilweise aufgebrochen, mit Darstellung der Lagerung des Rotors und der Getriebeanordnung,
- Fig. 3: eine Teildraufsicht auf den Rotor,
- Fig. 4: eine Teilansicht des unteren Endes eines Rotorblatts mit angeklappter Starthilfeklappe,
- Fig. 5: eine Teilansicht gemäß Fig. 4 mit senkrecht nach unten abgeklappter Starthilfeklappe,
- Fig. 6: eine perspektivische Teilansicht des unteren Endes eines Rotorblattes mit hydraulischer gesteuerter Starthilfeklappe und
- Fig. 7: eine schematische Darstellung der Wirkungsweise der erfindungsgemäßen Starthilfeklappen.

Die erfindungsgemäße Windkraftanlage weist einen beispielsweise auf einer Fundamentplatte 1 kippbar mittels eines Kippgelenks 3 angeordneten Teleskopmast 2 auf, der mittels einer Seilabspannung 4 in seiner aufrechten Stellung gehalten wird. Am oberen Ende des Teleskopmasts 2 ist ein Übersetzungsgetriebe 5 angeordnet, von dem Gelenkwellen 8 parallel zum Teleskopmast 2 zu einen weiteren, auf der Fundamentplatte 1 angeordneten Übersetzungsgetriebe 6 führen. Über dieses Übersetzungsgetriebe 6 wird ein Generator 7 und/oder eine Pumpe angetrieben. Der Generator 7 bzw. die Pumpe sind gut zugänglich auf der Fundamentplatte 1 angeordnet und belasten mit ihrem Gewicht nicht das obere Ende des Teleskopmasts 2.

Der Teleskopmast 2 läßt sich in nicht dargestellter Weise hydraulisch oder mechanisch hochfahren und absenken. Hierzu können die Gelenkwellen 8 entweder abgebaut oder auch teleskopisch verlängerbar und verkürzbar gestaltet sein.

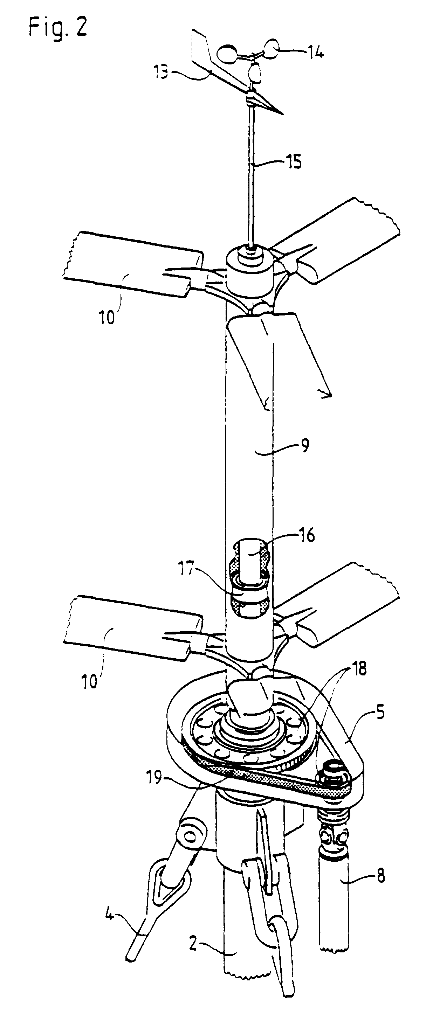

Wie aus Fig. 2 ersichtlich ragt vom oberen Ende des Teleskopmasts 2 eine Achse 16 nach oben, auf der ein Nabenrohr 9 mittels Wälzlagern 17 drehbar gelagert ist.

An dem Nabenrohr 9 sind beabstandete, radiale Tragarme 10 angeordnet, an deren freien Enden parallel zur Drehachse 16 verlaufende Rotorblätter 11 mit Tragflügelprofil befestigt sind. Diese Elemente bilden den Rotor 9, 10, 11. An einem Verlängerungsstab 15 der Achse 16, der oberhalb der oberen Enden der Rotorblätter 11 endet, sind ein Windrichtungsanzeiger 13 und ein Anemometer 14 angeordnet.

Die Kraftübertragung vom Rotor 9, 10, 11 über das Getriebe 5 auf die Gelenkwellen 8 erfolgt beispielsweise über Zahnräder 18 und einen Zahnriemen 19, der bei geräuschlosen Lauf für die schlupffreie Übertragung von verhältnismäßig großen Leistungen geeignet ist.

Es ist erkennbar, daß die Windkraftanlage aus einfachen, im Handel problemlos erhältlichen Bauteilen besteht und nur wenige Bauteile als Sonderanfertigung aufweist. Der Teleskopmast 2 kann aus glasfaserverstärkten Kunststoffrohren, aus Aluminium- oder Stahlrohren bestehen, während die radialen Tragarme 10 und die Rotorblätter 11 als glasfaserverstärkte Kunststoffprofile oder stranggepreßte Aluminiumprofile hergestellt sein können.

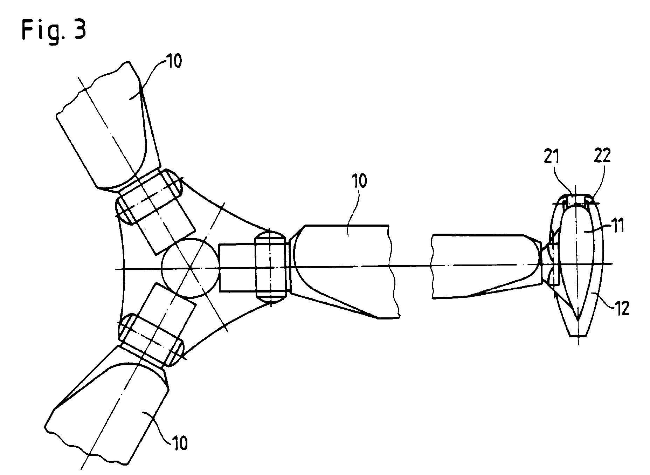

An den unteren Enden der Rotorblätter 11 sind die Starthilfeklappen 12 gelenkig angeordnet. Aus Fig. 3 ist ersichtlich, daß die Starthilfeklappen 12 mittels eines Klappgelenks 21 mit einer Schwenkachse 22 im Bereich der Profilvorderkante der Rotorblätter 11 angeordnet ist. Die Schwenkachse 22 liegt etwa senkrecht zur Drehachse 16 des Rotors 9, 10, 11. Die Fläche der Starthilfeklappen 12 ist größer als die Querschnittsfläche der Rotorblätter 11 und beträgt vorzugsweise etwa die doppelte Fläche. Die Starthilfeklappen 12 können, wie in Fig. 3 dargestellt, etwa dem Tragflügelprofil der Rotorblätter 11 entsprechen, jedoch können sie auch rechteckig ausgebildet sein.

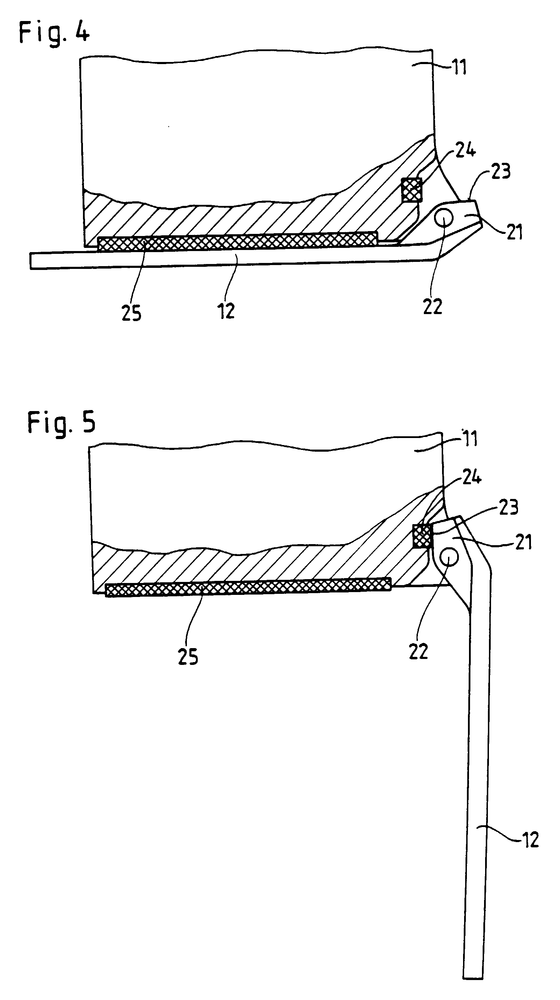

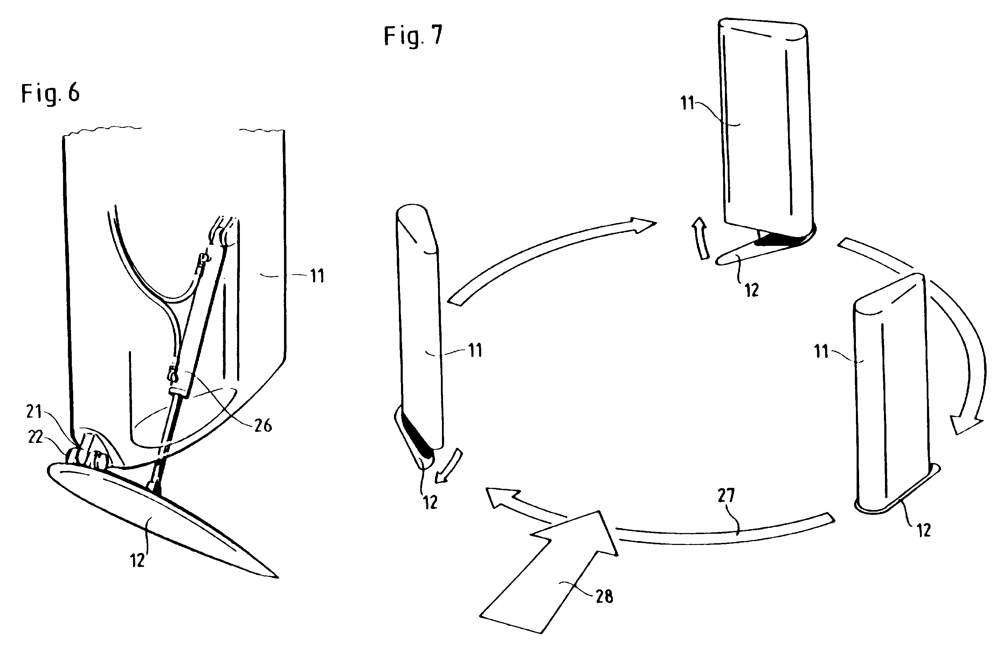

Aus Fig. 4, 5 und 7 ist die Wirkungsweise der Starthilfeklappen ersichtlich. Wird der Rotor 9, 10, 11 aus einer beliebigen Windrichtung, die in Fig. 7 mit dem Pfeil 28 bezeichnet ist, angeblasen und sind die Tragflügelprofile der Rotorblätter 11 in der gezeichneten Weise so angeordnet, daß sich die verdickte Profilvorderkante in Drehrichtung 27 bewegt, können die Starthilfeklappen 12 auf der Seite des Rotors 9, 10, 11, auf der die Rotorblätter 11 vom Wind an ihrer Hinterkante angeblasen werden, in die in Fig. 5 gezeigten Stellung aufgrund der Schwerkraft in eine etwa senkrecht nach unten gerichtete Stellung herunterklappen und liegen dann mit einer Nase 23 an einem Anschlag 24 des Rotorblatts 11 an. Die Starthilfeklappen 12 bieten in dieser Stellung dein Wind eine ausreichend große Angriffsfläche, so daß sich der Rotor 9, 10, 11 in Drehung versetzt. Gelangt ein Rotorblatt 11 während der Drehung auf die Seite des Rotors 9, 10, 11, auf der es an seiner Vorderkante angeblasen wird, greift der Wind an den Starthilfeklappen 12 ebenfalls von dieser Seite an und hebt sie in die in Fig. 4 dargestellte Stellung, in der die Starthilfeklappe 12 an einer Dämpfungsplatte 25 anliegt. Der Rotor 9, 10, 11 läuft bei einer Windgeschwindigkeit von etwa 2,5 m/s an. Bei einer Windgeschwindigkeit von etwa 4 m/s, bei der der Rotor 9, 10, 11 eine ausreichende Drehgeschwindigkeit erreicht, wird keine Starthilfe mehr benötigt und der Rotor kann bereits Leistung abgeben. In der Anlaufphase bei einer Windgeschwindigkeit zwischen 2,5 und 4,0 m/s heben sich die Starthilfeklappen 12 immer stärker an und flattern geringfügig mit den Windrichtungswechseln, ohne dabei jedoch Geräusche zu verursachen. Ab einer Windgeschwindigkeit von 4,0 m/s bleiben die Starthilfeklappen 12 hochgeklappt an der Dämpfungsplatte 25 anliegen und verbessern in dieser Stellung die aerodynamischen Eigenschaften der Rotorblätter 11, da sie die bei Tragflügelprofilen auftretenden, den Wirkungsgrad vermindernden Randwirbel vorteilhaft beeinflussen.

Bei dein dargestellten Ausführungsbeispiel befinden sich die Starthilfeklappen 12 an den unteren Enden der Rotorblätter 11, jedoch ist es selbstverständlich möglich, derartige Starthilfeklappen 12 an den oberen Enden der Rotorblätter 11 anzuordnen, jedoch ist es in diesen Fall erforderlich, eine Feder oder dergleichen zwischen dem Rotorblatt und der Starthilfeklappe 12 anzuordnen, die bestrebt ist, die Starthilfeklappen 12 zumindest geringfügig anzuheben, damit sie dem Wind eine Angriffsfläche bieten, wenn das Rotorblatt 11 mit seiner Profilhinterkante gegen den Wind läuft.

Werden die Starthilfeklappen 12 mit einer im Inneren der Rotorblätter 11 angeordneten Hydraulik-Kolben-Zylinder-Einheit 26 verbunden, wie sie in Fig. 6 dargestellt ist, lassen sich die Starthilfeklappen 12 auch zur Drehzahlregelung des Rotors 9, 10, 11 und als Sturmbremse verwenden.

Zu diesem Zweck weist die Windkraftanlage eine Steuereinheit 29 auf, die einerseits mit dem Windrichtungsanzeiger 13 und dem Anemometer 14 verbunden ist und andererseits einen nicht dargestellten Hydraulik-Kreislauf beaufschlagt, der auf die Hydraulik-Kolben-Zylinder-Einheiten 26 wirkt. Die erforderlichen Leitungen lassen sich durch den hohlen Teleskopmast 2 bis zum Rotor 9, 10, 11 und von dort über abgedichtete Drehdurchführungen zu den Hydraulik-Kolben-Zylinder-Einheiten 26 in den Rotorblättern 11 sowie zum Windrichtungsanzeiger 13 und dem Anemometer 14 führen.

Um den Anlauf des Rotors 9, 10, 11 zu erreichen, bewirkt die Steuereinheit 29 ein von der durch den Windrichtungsanzeiger 13 ermittelten Windrichtung abhängiges Ausklappen bzw. Hochklappen der Starthilfeklappen 12, so daß die Starthilfeklappen 12 die an den sich in Windrichtung bewegenden Rotorblättern 11 angeordnet sind, in die in Fig. 5 dargestellte Stellung gebracht werden, während die an den gegen die Windrichtung laufenden Rotorblättern 11 angebrachten Starthilfeklappen 12 in die in Fig. 4 dargestellte Stellung gebracht werden. Die Steuereinheit 29 bewirkt, daß bei der Drehung des Rotors 9, 10, 11 ein zyklisches Anheben und Abklappen der Starthilfeklappen 12 erfolgt. Überschreitet die Drehgeschwindigkeit des Rotors 9, 10, 11 die Nenndrehzahl oder übersteigt die durch das Anemometer 14 gemessene Windgeschwindigkeit einen vorbestimmten Wert, steuert die Steuereinheit 29 die Starthilfeklappen 12 als Bremsklappen an, derart, daß nunmehr die Starthilfeklappen 12 an den gegen die Windrichtung laufenden Rotorblättern 11 mehr oder weniger nach unten geklappt und die Starthilfeklappen 12 an den in Windrichtung laufenden Rotorblättern 11 nach oben geklappt werden. Auf diese Weise läßt sich eine einfache und zuverlässige Drehzahlregelung erreichen und ist eine Sturmbremse gegeben, die bis zu hohen Windgeschwindigkeiten bis zum Orkan wirksam ist. Die erfindungsgemäße Windkraftanlage wird nur zu Wartungs- oder Reparaturzwecken umgelegt.

Die Steuerung der Drehzahl bzw. der Wirkung als Sturmbremse erfolgt im dargestellten Beispiel elektro-hydraulisch, jedoch ist es auch möglich, hierzu rein mechanische Mittel einzusetzen, z. B. einen nach der Windrichtung einstellbaren Exzenterring, von dem aus die Starthilfeklappen 12 über Lenker und Winkelhebel zyklisch bewegt werden. Wenn sich außer der Winkellage auch die Exzentrizität des Exzenterrings verändern läßt, ist damit auch die Möglichkeit einer Drehzahlregelung gegeben, da auf diese Weise ein verschieden weites Ausklappen der Starthilfeklappen 12 einstellbar ist.

Anzumerken ist des weiteren, daß sich die Gelenkwellen 8 auch innerhalb des Teleskopmasts anordnen lassen, insbesondere bei Kleinanlagen bis etwa 10 kW, so daß sich am Mastende außer dem Rotor 9, 10, 11 keine beweglichen Teile befinden.

Die erfindungsgemäße Windkraftanlage läßt sich einfach zerlegen, kostengünstig transportieren und ohne besondere Hilfsmittel errichten, ist praktisch wartungsfrei und problemlos zu handhaben, so daß ein sehr niedriger Preis für die abgegebene kWh erzielbar ist.

## Patentansprüche

1. Windkraftanlage mit Darrieus-H-Rotor aus wenigstens zwei rotationssymmetrisch angeordneten, untereinander und zu einer Drehachse (16) parallel verlaufenden Rotorblättern (11) mit Tragflügelprofil und um eine zur Drehachse (16) senkrechten Schwenkachse (22) gegen einen Anschlag (24) ausschwenkbaren Starthilfeklappen (12), **dadurch gekennzeichnet,** daß die Starthilfeklappen (12) an wenigstens einem Ende eines jeden Rotorblattes (11) angeordnet sind.

2. Windkraftanlage nach Anspruch 1, **dadurch gekennzeichnet,** daß die Schwenkachse (22) bezogen auf die Drehrichtung (27) im Bereich der Profil-Vorderkante des Rotorblatts (11) angeordnet ist.

3. Windkraftanlage nach Anspruch 1 oder 2, **dadurch gekennzeichnet,** daß die Fläche der Starthilfeklappen (12) größer als die Querschnittsfläche der Rotorblätter (11) ist.

4. Windkraftanlage nach Anspruch 1, 2 oder 3, **dadurch gekennzeichnet,** daß die Drehachse (16) des Rotors senkrecht steht und die Starthilfeklappen (12) an den nach unten weisenden Enden der Rotorblätter (11) unter der Wirkung der Schwerkraft ausklappbar angeordnet sind.

5. Windkraftanlage nach einen der Ansprüche 1 bis 4, **dadurch gekennzeichnet,** daß die Drehachse (16) des Rotors senkrecht steht, die Starthilfeklappen (12) an den nach unten und/oder an den nach oben weisenden Enden der Rotorblätter (11) angeordnet sind und die an den nach oben weisenden Enden der Rotorblätter (16) angeordneten Starthilfeklappen (12) nachgiebig federnd ausklappbar sind.

6. Windkraftanlage nach einem der Ansprüche 1 bis 5, **dadurch gekennzeichnet,** daß wenigstens ein Teil der unteren und/oder oberen Starthilfeklappen (12) aktiv kraftbeaufschlagt ausklappbar ist.

7. Windkraftanlage nach Anspruch 6, **dadurch gekennzeichnet,** daß die Kraftbeaufschlagung der Starthilfeklappen (12) zyklisch gesteuert wahlweise als Starthilfe oder als Sturmbremse erfolgt.

8. Windkraftanlage nach Anspruch 7, **dadurch gekennzeichnet,** daß die Kraftbeaufschlagung mittels in den Rotorblättern (11) angeordneten Hydraulik-Kolben-Zylinder-Einheiten (26) erfolgt.

9. Windkraftanlage nach Anspruch 7 oder 8, **gekennzeichnet durch** eine windrichtungs- und windgeschwindigkeitsabhängig wirkende Steuereinheit (29) für die zyklische Kraftbeaufschlagung der Starthilfeklappen (12).

## Claims

1. Wind turbine with a Darrieus H-rotor, comprising at least two aerodynamically-profiled rotor blades (11) arranged so as to rotate symmetrically and aligned parallel to one another and to a rotation axis (16), and auxiliary starter flaps (12) which can be opened about a swivel axis (22) perpendicular to the rotation axis (16), coming to rest against an abutment (24), characterized in that said auxiliary starter-flaps (12) are located on at least one end of each rotor-blade (11).

2. Wind turbine according to Claim 1, characterized in that the swivel axis (22) is arranged in the area of the front edge, in relation to the direction of turn (27), of the profile of the rotor-blade (11).

3. Wind turbine according to Claim 1 or 2, characterized in that the area of the auxiliary starter-flaps (12) is greater than the area of the cross-section of the rotor-blades (11).

4. Wind turbine according to Claim 1, 2 or 3, characterized in that the rotation axis (16) of the rotors is vertical and the auxiliary starter-flaps (12) are arranged on the downward-pointing ends of the rotor-blades (11) in such a way that they are openable by the effect of gravity.

5. Wind turbine according to one of Claims 1 to 4, characterized in that the rotation axis (16) of the rotor is vertical, the auxiliary starter-flaps (12) are located on the downward-pointing and/or the upward-pointing ends of the rotor-blades (11), and that the auxiliary starter-flaps (12) located on the upward-pointing ends of the rotor blades (16) are openable by a resilient spring effect

6. Wind turbine according to one of Claims 1 to 5, characterized in that at least one section of the lower and/or upper auxiliary starter-flaps (12) is openable by the application of active power.

7. Wind turbine according to Claim 6, characterized in that the power applied to the auxiliary starter-flaps (12) is cyclically controlled and may be alternatively used as an auxiliary starting means or as a storm brake.

8. Wind turbine according to Claim 7, characterized in that the power is applied by means of hydraulically-operated piston-cylinder units (26) located within the rotor-blades (11).

9. Wind turbine according to Claim 7 or 8, characterized by a control unit (29) whose effect is dependent on wind direction and speed and which applies power cyclically to the auxiliary starter-flaps (12).

## Revendications

1. Eolienne avec rotor en H de Darrieu constitué d'au moins deux pales de rotor (11) disposées dans une symétrie de révolution et s'étendant parallèlement entre elles et parallèlement à un axe de rotation (16), avec profil d'aile portante, et des clapets auxiliaires de démarrage (12) qui peuvent pivoter autour d'un axe de pivotement (22), perpendiculaire à l'axe de rotation (16), contre une butée (24), caractérisée en ce que les clapets auxiliaires de démarrage (12) sont disposés sur au moins une extrémité de chaque pale de rotor (11).

2. Eolienne selon la revendication 1, caractérisée en ce que l'axe de pivotement (22) est disposé, par rapport au sens de rotation (27), dans la zone du bord avant profilé de la pale de rotor (11).

3. Eolienne selon la revendication 1 ou 2, caractérisée en ce que la surface des clapets auxiliaires de démarrage (12) est plus grande que la surface de section transversale des pales de rotor (11).

4. Eolienne selon les revendications 1, 2 ou 3, caractérisée en ce que l'axe de rotation (16) du rotor est vertical et les clapets auxiliaires de démarrage (12) sont disposés aux extrémités dirigées vers le bas des pales de rotor (11), de manière à pouvoir s'ouvrir sous l'effet de la force de gravité.

5. Eolienne selon l'une des revendications 1 à 4, caractérisée en ce que l'axe de rotation (16) du rotor est vertical, les clapets auxiliaires de démarrage (12) sont disposés aux extrémités dirigées vers le bas et/ou vers le haut des pales de rotor (11) et les clapets auxiliaires de démarrage (12), disposés aux extrémités dirigées vers le haut des pales de rotor (16), peuvent s'ouvrir en se déformant élastiquement.

6. Eolienne selon l'une des revendications 1 à 5, caractérisée en ce qu'au moins une partie des clapets auxiliaires de démarrage (12) inférieurs et/ou supérieurs peuvent s'ouvrir activement sous l'effet d'une force.

7. Eolienne selon la revendication 6, caractérisée en ce que l'action d'une force sur les clapets auxiliaires de démarrage (12) est commandée cycliquement, au choix en tant qu'aide au démarrage ou en tant que frein de fort coup de vent.

8. Eolienne selon la revendication 7, caractérisée en ce que l'action d'une force s'effectue au moyen d'unités hydrauliques (26) à cylindres et pistons, disposées dans les pales de rotor (11).

9. Eolienne selon la revendication 7 ou 8, caractérisée par une unité de commande (9), agissant en fonction du sens et de la vitesse du vent, pour l'action cyclique d'une force sur les clapets auxiliaires de démarrage (12).
